# EUROPEAN PATENT SPECIFICATION

(11) **EP 0 354 560 B1**
(45) Date of publication and mention of the grant of the patent: **15.12.1993**
(21) Application number: 89114746.4
(22) Date of filing: 09.08.1989
(51) Int. Cl.: G03G 15/00, G03B 27/62

(54) **Document-plate-positional information device**
Informationsvorrichtung für Dokumentenabdeckplattenposition
Dispositif d'information pour la position d'un couvercle de documents

(30) Priority: 10.08.1988 JP 200439/88
(43) Date of publication of application: 14.02.1990
(73) Proprietor: MITA INDUSTRIAL CO., LTD., Osaka 540 (JP)
(72) Inventor: Komaki, Susumu, Nishinomiya-shi Hyogo 662 (JP); Takehara, Susumu, Osaka-shi Osaka 533 (JP)
(74) Representative: Schwan, Gerhard, Dipl.-Ing.

(56) References cited:
- EP-A- 0 253 641
- US-A- 4 432 639
- US-A- 4 666 286
- PATENT ABSTRACTS OF JAPAN, vol. 12 no. 46 (P-665)(2893), 12 February 1988 & JP-A-62 192760
- PATENT ABSTRACTS OF JAPAN, vol. 5, no. 26 (P-49)(689), 17 February 1981 & JP-A-55 153949
- PATENT ABSTRACTS OF JAPAN, vol. 13, no. 1 (P-808)(3349), 6 January 1989 & JP-A-63 210952
- PATENT ABSTRACTS OF JAPAN, vol. 13, no. 1 (P-808)(3349) 6 January 1989 & JP-A-63 210953

## Description

The present invention relates to a clam-shell shaped image forming apparatus with a movable document plate, particularly to a document-plate-positional information device informing the operator of a fixed position of the document plate on an upper body of the apparatus when the upper body is opened.

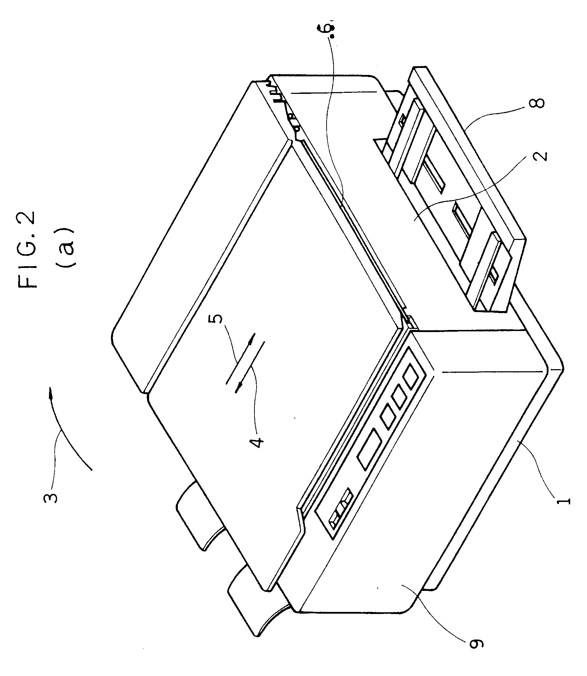

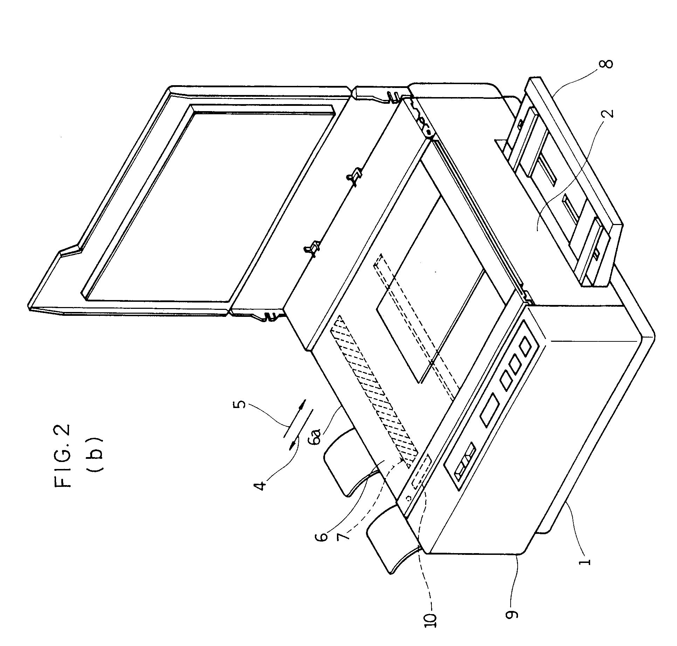

A copying machine as known from Japanese Laid Open No. 58-190 962 and No. 58-221 835 is shown in Figs. 2 (a) and 2 (b) as an example of the above-said kind of the image forming apparatus. When an upper body 2 of the copying machine will be opened in the direction of the arrow 3 from a lower body 1 as the standard, a document plate 6 mounted on the upper body 2 for movement in the direction of arrows 4, 5 must have been moved to a fixed position on the upper body 2 in advance, i.e., an edge portion 6a of the document plate 6 must have been disposed in the area shown by the hatching 7 on the top face of the upper body 2.

However, by the movement of the document plate 6 mentioned above, a paper-feed section 8 or the document plate 6 might be damaged by a collision of the document plate 6 against the paper-feed section 8 installed at the side of the lower body 1 of the copying machine if the upper body 2 is opened and closed in the state of the document plate 6 in a position except the fixed one on the upper body 2. In addition, the document plate 6 might be damaged due to pressing down on its top face with the operator's hand intermeddling between them by a document cover.

Accordingly, the copying machine should be designed such that the upper body 2 can be opened by operation of a release lever (not shown in Figs. 2 (a) and 2 (b)) provided in a cover 9 only upon movement of the document plate 6 to the fixed position on the upper body 2 in advance.

In the conventional copying machine a position mark 10 is provided at a position equivalent to the part shown by the hatching 7 on the top face of the upper body 2 below the under face of the document plate 6. The document plate 6 finishes moving to the fixed position on the upper body 2 by the edge portion 6a of the document plate 6 being stopped by an operator at the position corresponding to the area of the position mark 10 after movement of the document plate in the direction of the arrow 4 or the arrow 5.

The document plate 6 should be stopped at the defined position on the upper body 2 when there is a necessity for the upper body 2 to be opened in order to dispose the jammed papers after a paper jam occurred in the body of the copying machine. For example, the position mark 10 on the upper body 2 will become visible from the outside due to its exposure in case that the document plate 6 will stop in the condition of completion of movement in the direction of the arrow 5. Therefore an operator easily can make the document plate 6 move such that the position of the edge portion 6a corresponds to the area of the position mark 10.

However, the operator cannot notice the position mark 10 from the outside owing to the position mark 10 on the upper body 2 being covered by the document plate 6 in case that the document plate 6 will stop in the condition of completion of movement in the direction of the arrow 4.

So the operator will make the position mark 10 visible from the outside by at first causing the document plate 6 to move in the direction of the arrow 5 beyond the fixed position on the upper body 2. Next the operator must align the document plate 6 with the fixed position on the upper body 2 by movement of the document plate 6 in the direction of the arrow 4. For that reason, the handling in the opening of the upper body 2 is inconvenient in the case of the foregoing copying machine.

The present invention was made to solve the conventional problems as mentioned above.

It is hence the general object of this invention to provide a document-plate-positional information device which informs an operator surely of a fixed position of the document plate on an upper body.

In conformity with the present invention a document-plate-positional information device comprises
means for interfering with a movable document plate of a clam-shell shaped image forming apparatus, said interfering means projecting from an uper body of said apparatus towards said document plate when said upper body is opened; and
means for informing the operator by emitting an information signal when said document plate is in a fixed position on said upper body, said signal being emitted when the interfering means interferes with said document plate.

In the document-plate-positional information device of the present invention, when the upper body of the image forming apparatus is openend, the means for informing emits the information signal when the interfering means interferes with the document plate. Therefore, an operator can conveniently recognize the completion of the movement of the document plate to the fixed position on the upper body.

An embodiment of the invention is described in more detail below in connection with the accompanying drawings in which:
- Fig. 1: is a vertical sectional view of a document-plate-positional information device according to an embodiment of the present invention;
- Fig. 2 (a): is a perspective side view of a clam-shell shaped copying machine with a movable document plate in the closing state of the document cover on the document plate as shown for the purpose of the explanation of the background of the present invention; and
- Fig. 2 (b): is a view as in Fig. 2 (a) showing the document cover in the opening state on the document plate.

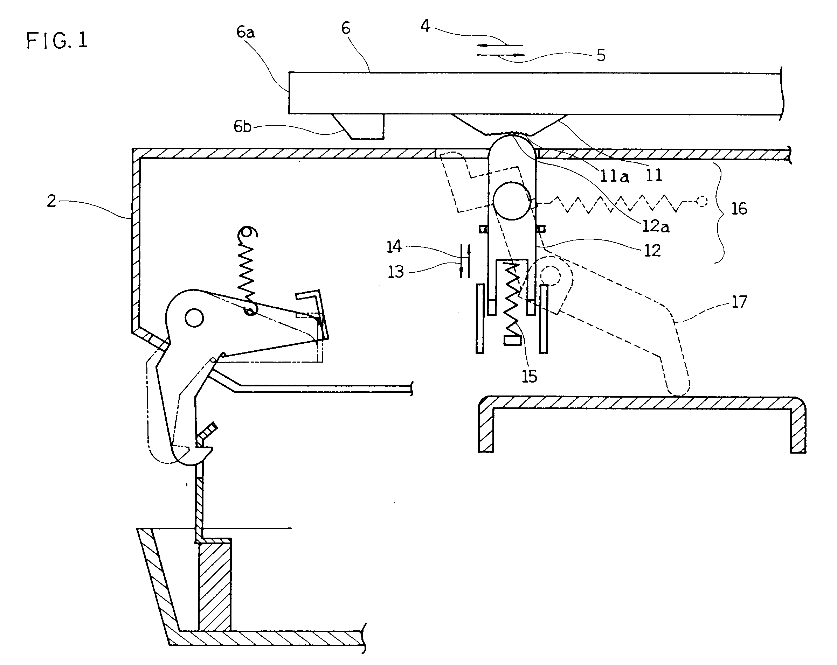

In the document-plate-positional information device shown in Fig. 1, a document plate 6 is provided on the upper body 2 of a copying machine. Document plate 6 is movable in the direction of the arrows 4, 5. A protrusion 11 is installed beneath the under face of the document plate 6. An irregular portion 11a is formed in an irregular continuous shape in the direction of arrows 4, 5 beneath the under face of the protrusion 11.

An actuator 12 constitutes means for interfering. Actuator 12 is mounted in the upper body 2 for slidable movement in the direction of arrows 13, 14 below the under face of the document plate 6 at a position corresponding to the position of the protrusion 11, when the document plate 6 is at the fixed position on the upper body 2. The actuator 12 is alsways elastically biased toward the document plate 6 by means of a spring 15, and is assembled so as to project from the upper body 2 toward the document plate 6 only in the case that a cover 9 of the copying machine (referring to Fig. 2 (a) and Fig. 2 (b)) will be opened previous to the opening of the upper body 2. Therefore, when a tip 12a of the actuator 12 projects from the upper body 2, after opening of the cover 9, and interferes out of/in touch with the irregular portion 11a of the protrusion 11 of the document plate 6 moving on the upper body 2, an interfering sound is emitted as the information signal from the contacting part of the irregular portion 11a of the protrusion 11 and the tip 12a of the acutator 12. Thereby an operator is informed that the document plate 6 has been moved to the fixed position of the upper body 2. As a result, the detection of the position of the document plate 6 should be made at the fixed position on the upper body 2.

In the foregoing case, the means for informing, which emits the information signal about the movement of the document plate 6 to the fixed position on the upper body 2, is composed of the protrusion 11 and the acutator 12.

In addition, reference sign 17 in Fig. 1 shows a claw catching a projection 6b installed beneath the under face of the document plate 6 at the time of opening of the upper body 2 in order to prevent the document plate 6 from sliding down from the upper body 2.

According to the document-plate-positional information device composed as mentioned above, for instance, in case that there is a necessity for the upper body 2 to be opened in order that jammed papers can be disposed after a paper jam has occurred in the body of the copying machine and in case that the document plate 6 stops at any position on the upper body 2, the interfering sound is emitted from the contacting part of the tip 12a of the acutator 12 and the irregular portion 11a of the protrusion 11 if only the document plate 6 is moved on the upper body 2 after the projection of the actuator 12 toward the document plate 6 in succession of the cover 9 opening.

For that reason, an operator can easily notice the fixed position of the document plate 6 on the upper body 2. As a result, the operator can make the document plate 6 move conveniently and certainly to the fixed position on the upper body 2.

Besides, a modified document-plate-positional information device can comprise a detector which is provided on the actuator 12 to detect the interference of the protrusion 11 and the actuator 12, and which can electrically sound an alarm based on the detect signal from the detector or can display an indication about the interference in an operation panel of the copying machine.

With the provision of the document-plate-positional information device of the present invention, a document plate can be moved conveniently and certainly to the fixed position on an upper body in case of a stop at any position on the upper body.

## Claims

1. A document-plate-positional information device comprising:
means for interfering (12) with a movable document plate (6) of a clam-shell shaped image forming apparatus, said interfering means (12) projecting from an upper body (2) of said apparatus towards said document plate (6) when said upper body (2) is opened; and
means for informing (11, 12) the operator by emitting an information signal when said document plate (6) is in a fixed position on said upper body, said signal being emitted when the interfering means (12) intereferes with said document plate (6).

2. A document-plate-positional information device as claimed in claim 1, wherein said means for interfering comprises a slideably mounted actuator (12) which is biased toward the document plate (6) and which projects from said upper body (2) only when a cover (9) of the image forming apparatus has been opened previous to the opening of the upper body (2).

3. A document-plate-positional information device as claimed in claim 2, wherein said means for interfering are defined by said actuator (12) and a protrusion (11) mounted beneath the under face of the document plate (6).

4. A document-plate-positional information device as claimed in claim 3, wherein said protrusion (11) has an irregular portion (11a) adapted to emit, when interfering with said actuator (12), a sound signal as said information signal.

## Patentansprüche

1. Informationsvorrichtung für Vorlagenplattenposition mit:
einer Anordnung (12), die mit einer bewegbaren Vorlagenplatte (6) eines zweischaligen Bilderzeugungsgerätes in Eingriff kommt und die von einem oberen Gehäuseteil (2) des Gerätes in Richtung auf die Vorlagenplatte (6) vorsteht, wenn das obere Gehäuseteil (2) geöffnet ist; und
einer Anordnung (11, 12), die den Bediener informiert, indem sie ein Informationssignal abgibt, wenn sich die Vorlagenplatte (6) in einer festen Position auf dem oberen Gehäuseteil befindet, wobei dieses Signal abgegeben wird, wenn die Eingriffsanordnung (12) mit der Vorlagenplatte (6) in Eingriff kommt.

2. Informationsvorrichtung für Vorlagenplattenposition nach Anspruch 1, wobei die Eingriffsanordnung ein verstellbar gelagertes Betätigungsglied (12) aufweist, das in Richtung auf die Vorlagenplatte (6) vorgespannt ist und das von dem oberen Gehäuseteil (2) nur vorsteht, wenn eine Abdeckung (9) des Bilderzeugungsgerätes vor dem Öffnen des oberen Gelläuseteils (2) geöffnet wurde.

3. Informationsvorrichtung für Vorlagenplattenposition nach Anspruch 2, wobei die Eingriffsanordnung von dem Betätigungsglied (12) und einem Ansatz (11) gebildet ist, der unter der Unterseite der Vorlagenplatte (6) montiert ist.

4. Informationsvorrichtung für Vorlagenplattenposition nach Anspruch 3, wobei der Ansatz (11) ein unregelmäßig geformtes Teil (11a) aufweist, das im Zusammenwirken mit dem Betätigungsglied (12) ein Schallsignal als das Informationssignal abgeben kann.

## Revendications

1. Dispositif d'information pour la position d'un plateau porte-document, comportant :
des moyens (12) pour interférer avec un plateau mobile (6) porte-document d'un appareil de formation d'images en forme de coquille, lesdits moyens d'interférence (12) faisant saillie d'un corps supérieur (2) dudit appareil vers ledit plateau porte-document (6) lorsque ledit corps supérieur (2) est ouvert ; et
des moyens (11, 12) pour informer l'opérateur en émettant un signal d'information lorsque ledit plateau porte-document (6) est dans une position fixe sur ledit corps supérieur, ledit signal étant émis lorsque les moyens d'interférence (12) interfèrent avec ledit plateau porte-document (6).

2. Dispositif d'information pour la position d'un plateau porte-document selon la revendication 1, dans lequel lesdits moyens d'interférence comportent un actionneur (12) monté de façon coulissante, qui est sollicité vers le plateau porte-document (6) et qui fait saillie dudit corps supérieur (2) et uniquement lorsqu'un capot (9) de l'appareil de formation d'images a été ouvert avant l'ouverture du corps supérieur (2).

3. Dispositif d'information pour la position d'un plateau porte-document selon la revendication 2, dans lequel lesdits moyens d'interférence sont définis par ledit actionneur (12) et une saillie (11) montée au-dessous de la face inférieure du plateau porte-document (6).

4. Dispositif d'information pour la position d'un plateau porte-document selon la revendication 3, dans lequel ladite saillie (11) comporte une partie irrégulière (11a) conçue pour émettre, lorsqu'elle interfère avec ledit actionneur (12), un signal sonore constituant ledit signal d'information.
